# EUROPÄISCHE PATENTSCHRIFT

(11) **EP 1 677 943 B1**
(45) Veröffentlichungstag und Bekanntmachung des Hinweises auf die Patenterteilung: **16.07.2008**
(21) Anmeldenummer: 04790992.4
(22) Anmeldetag: 28.10.2004
(51) Int. Cl.: B23Q 1/03, B25B 11/00, B23Q 1/28, B23Q 17/22, B23Q 3/18

(54) **AUFSPANNTISCH MIT EINER TELESKOPROHREINHEIT UND EINEM SAUGTELLER AUFWEISENDEN SPANNELEMENT**
CLAMPING TABLE COMPRISING A TELESCOPIC TUBE UNIT AND A CLAMPING ELEMENT THAT IS PROVIDED WITH SUCTION CUPS
TABLE DE SERRAGE AVEC TUBE TELESCOPIQUE ET DES ELEMENTS DE SERRAGE AVEC DES VENTOUSES

(30) Priorität: 30.10.2003 DE 10350572
(43) Veröffentlichungstag der Anmeldung: 12.07.2006
(73) Patentinhaber: Wilhelm Altendorf GmbH & Co. KG, D-32429 Minden (DE)
(72) Erfinder: ZARSKE, Wolfgang, 96465 Neustadt (DE)
(74) Vertreter: Birken, Lars
(86) Internationale Anmeldenummer: PCT/EP2004/012223
(87) Internationale Veröffentlichungsnummer: WO 2005/042204

(56) Entgegenhaltungen:
- EP-A- 0 534 585
- DE-A1- 10 023 915
- DE-A1- 10 023 921
- US-A- 3 542 354
- US-A- 4 684 113
- US-A- 5 364 083
- US-A- 5 457 868
- US-A- 6 121 781
- US-B1- 6 250 619

## Beschreibung

Die Erfindung betrifft ein Spannelement für einen Aufspanntisch für Werkstücke in einer Werkzeugmaschine nach dem Oberbegriff von Anspruch 1 (siehe, z.B., DE-100 23 915-A).

Aus dem DE-GM 201 07 746 ist ein derartiger sogenannter Matrixtisch bekannt, der insbesondere der Formatierung von Platten aus Holzwerkstoffen dient. Häufig ist ein solcher Aufspanntisch Teil eines Bearbeitungszentrums und wird von einem in Längsrichtung (x-Richtung) des Tisches verfahrbaren Ausleger überspannt, an dem ein quer (y-Richtung) und senkrecht (z-Richtung) zum Tisch verfahrbarer Werkzeugkopf angeordnet ist und eine Antriebsspindel trägt, mit der verschiedene Bearbeitungsaggregate wie namentlich Fräser und Bohrer, aber auch kleine Kreissägeblätter koppelbar sind.

Bei dem aus dem DE-GM 201 07 746 bekannten Spannelement ist als Positionierungsantrieb ein Schrittmotor am oberen Ende des stationären Teleskoprohres und damit konzentrisch zu diesem sowie dem verschiebbaren Teleskoprohr mit einem daran zentrisch befestigten, den Schrittmotor durchsetzenden Spindeltrieb angeordnet. Die elektrischen Zuleitungen zum Schrittmotor laufen durch das stationäre Teleskoprohr parallel zum Spindeltrieb, während das verschiebbare Teleskoprohr das stationäre außenseitig übergreift. Weil mit dieser Bauweise nur ein relativ großer Durchmesser der Spannelemente verwirklicht werden kann, ergibt sich eine entsprechend grobstufige Einteilung der Tischmatrix. Auch sind Wartungs- und Reparaturarbeiten behindert.

Aus US 4,684,113 ist eine universelle Haltevorrichtung zum Halten eines Werkstücks bekannt, welches eine konturierte Haltefläche aufweist. Die Vorrichtung beinhaltet eine Vielzahl von einzelnen Haltestangen, welche mit der Kontur der konturierten Haltefläche zusammenwirken, indem eine Saugkraft von einem Saugteller am oberen Ende der Haltestangen ausgeübt wird. Aus US 5,364,083 ist eine Vorrichtung der gleichen Art wie US 4,684,113 zeigt, bekannt.

Aus DE 100 23 915 A1 ist ein Vakuumansaugelement bekannt, bei dem ein Saugluftpfad zu einem Dichtelement, das am oberen Ende eines Haltelements angeordnet ist, durch das Halteelement geführt wird. Das Halteelement ist axial verschieblich in einem Gehäuse angeordnet und der in axialer Verschieberichtung obersten Position wirkt der Saugluftkanal im Halteelement mit einem Vakuumkanal zusammen, um in genau dieser Position einen Saugluftpfad auszubilden.

Diesen Nachteilen des Standes der Technik begegnet die Erfindung dadurch, dass ein Spannelement nach Anspruch 1 bereitgestellt wird.

Mit solchen erfindungsgemäßen Spannelementen lässt sich ein Aufspanntisch derart betreiben, dass das aufzuspannende Werkstück unter Seitenausrichtung auf ortsfeste Stützen gelegt wird, welche eine Werkstück-Zuführebene definieren und die vollständig eingefahrenen Spannelemente überragen, hierauf die programmiert ausgewählten Spannelemente gegen das Werkstück ausgefahren werden und dieses bis über den kurzen Ausfahrbereich hinaus anheben, so dass durch den Saugluftpfad Unterdruck an die die unterbrochene Werkstück-Auflagefläche bildenden Saugteller gelangt und das Werkstück festgespannt wird, und dass schließlich diese aktivierten Spannelemente weiter in eine Arbeitsstellung - von mehreren möglichen Arbeitsstellungen - ausgefahren werden.

Gemäß einer ersten bevorzugten Ausgestaltung ist der Positionierungsantrieb koaxial zur Teleskoprohreinheit angeordnet und mittels einer formschlüssigen Steckkupplung mit dem verschiebbaren Teleskoprohr lösbar gekoppelt. Auf diese Weise ist eine schlankere Ausbildung des Spannelements möglich, wobei es vorteilhaft ist, das verschiebbare Teleskoprohr im Innern des stationären äußeren Teleskoprohres zu führen. Zugleich kann das gesamte Spannelement - ohne den fest installierten und elektrisch oder anderweit angeschlossenen Antrieb - problemlos ausgewechselt werden, falls Probleme der mechanischen Führung oder Undichtigkeiten hinsichtlich der Saugluft auftreten sollten.

Nach einer zweiten bevorzugten Ausgestaltung der Erfindung ist der Positionierungsantrieb ebenfalls koaxial an der Teleskoprohreinheit angeordnet, aber mit dem verschiebbaren Teleskoprohr bleibend gekoppelt sowie mittels einer lösbaren Steckverbindung an eine Stromversorgung elektrisch angeschlossen. In diesem Fall ist also der Positionierungsantrieb Teil des im Tisch lösbar gehaltenen Spannelements, so dass es zwar keiner mechanischen Kupplung zwischen dem Antrieb und dem verschiebbaren Teleskoprohr bedarf, wohl aber einer elektrischen Steckverbindung zwischen dem Tisch und jedem Spannelement. Diese Steckverbindung kann zugleich eine mechanische Zentrierung bilden.

Im einen wie im anderen Fall ist der Positionierungsantrieb vorzugsweise - wie an sich bekannt - ein Schrittmotor und wirkt mit einem zentrischen Spindeltrieb in der Teleskoprohreinheit zusammen. Dadurch lassen sich verschiedene Ausfahrhöhen des verschiebbaren Teleskoprohres (und damit des Saugtellers) sehr feinstufig bewirken und auf diese Weise mehrere unterschiedliche Höhenlagen des aufgespannten Werkstücks reproduzierbar und hinsichtlich der beteiligten Spannelemente einheitlich erzielen.

Eine andere Weiterbildung des Spannelements, die nicht notwendigerweise auf dessen vorstehend beschriebene Ausbildung beschränkt ist, sieht vor, dass im stationären (äußeren) Teleskoprohr der Teleskoprohreinheit nahe ihrem kupplungsfernen Ende eine Ringmanschette befestigt ist, wobei der Raum zwischen dieser und der Innenwandung des stationären Teleskoprohres mit Druckluft beaufschlagbar ist, um durch Anpressen der Manschette an das bewegliche (innere) Teleskoprohr dieses klemmend zu arretieren. Insbesondere besteht die dünnwandige Manschette einstückig mit beabstandeten Befestigungs- und Dichtungsringen aus Kunststoff. Auf diese Weise können die beweglichen Teleskoprohre der beteiligten Spannelemente, wenn sie eine ausgefahrene Arbeitsstellung erreicht haben, in dieser Stellung versteift werden, so dass bei der anschließenden Bearbeitung des aufgespannten Werkstücks die Spannelemente von den dabei auftretenden Kräften nicht in Schwingungen versetzt werden, was die Genauigkeit der Bearbeitung beeinträchtigen würde.

Ein weiterer Aspekt der Erfindung ist ein Aufspanntisch mit einer Vielzahl nebeneinander angeordneter Spannelemente der zuvor beschriebenen Art.

Besonders vorteilhaft ist es, die Teleskopeinheiten und die Positionierungsantriebe in tischüberspannenden Traversen anzuordnen, wobei mit dem befestigenden Einstecken der Spannelemente in die zugehörigen Traversen zugleich die mechanische bzw. elektrische Ankopplung an den motorischen Antrieb bzw. dessen Stromversorgung hergestellt ist. Auch der Anschluss an die Luftführung lässt sich auf diese Weise einfach und elegant verwirklichen.

Weitere Ausbildungen und Einzelheiten des Aufspanntisches bzw. seiner erfindungsgemäßen Spannelemente sind Gegenstände weiterer Unteransprüche.

Näheres veranschaulichen die zeichnerischen Darstellungen von Ausführungsbeispielen und deren nachfolgende Beschreibung. In den Zeichnungen zeigt:
- Figur 1: eine Draufsicht auf einen Aufspanntisch mit einer Vielzahl nebeneinander angeordneter erfindungsgemäßer Spannelemente;
- Figur 2: einen Vertikalschnitt durch zwei in x-Richtung benachbarte, zum gleichen Traversensatz gehörende Spannelemente in ihrer Ruhestellung;
- Figur 3: den Kreisausschnitt III in Figur 2 in vergrößertem Maßstab;
- Figur 4: den Kreisausschnitt IV in Figur 2 in vergrößertem Maßstab;
- Figur 5: den Kreisausschnitt V in Figur 2 in vergrößertem Maßstab;
- Figur 6: einen der Figur 2 ähnlichen Vertikalschnitt durch zwei in Querrichtung (y-Richtung) des Aufspanntisches benachbarte Spannelemente einer anderen Ausführungsform;
- Figur 7: einen schematischen Längsschnitt durch den Aufspanntisch in Figur 1 mit der Darstellung eines zugehörigen, den Bearbeitungskopf nebst Bearbeitungsaggregat tragenden Auslegers in zwei verschiedenen Bearbeitungssituationen und verschiedenen Arbeitsstellungen ausgewählter Spannelemente;
- Figur 8: den Kreisausschnitt VIII in Figur 7 in vergrößertem Maßstab;
- Figur 9: den Kreisausschnitt IX in Figur 7 in vergrößertem Maßstab;
- Figur 10: in perspektivischer Darstellung einen Schrittmotor nebst Kupplungspartner für ein Spannelement gemäß Figur 2;
- Figur 11: eine Seitenansicht des Schrittmotors nebst Kupplungspartner in Figur 10 in vergrößertem Maßstab; und
- Figur 12: eine Draufsicht auf den Schrittmotor nebst Kupplungspartner in den Figuren 10 und 11.

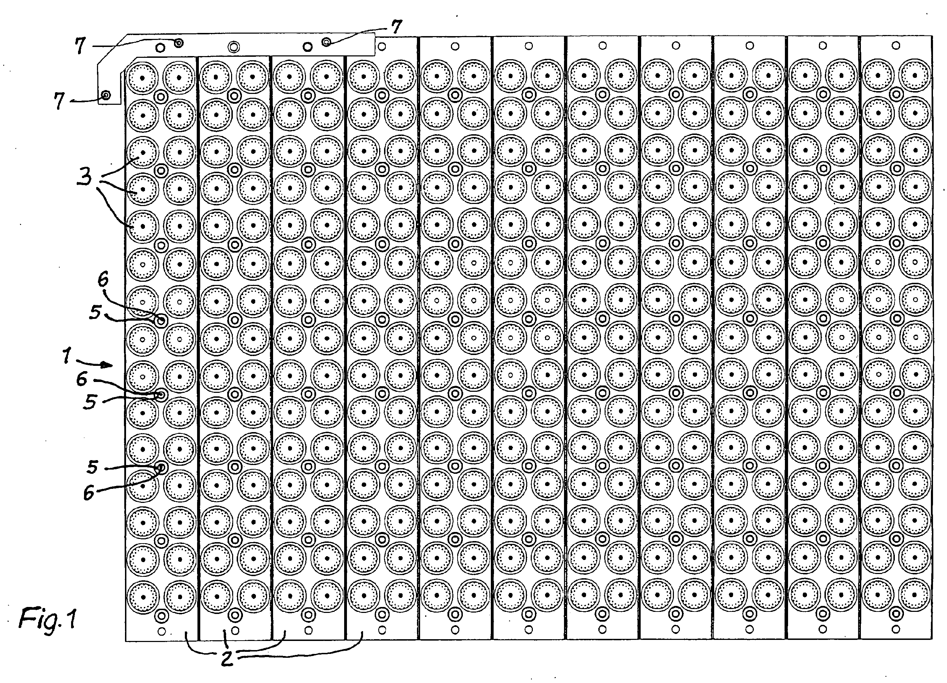

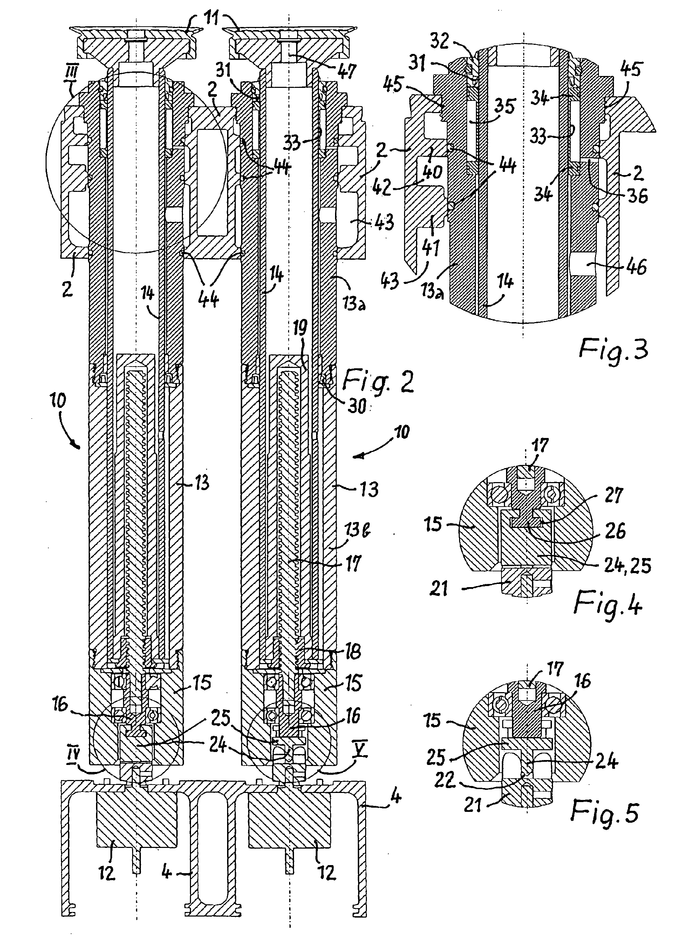

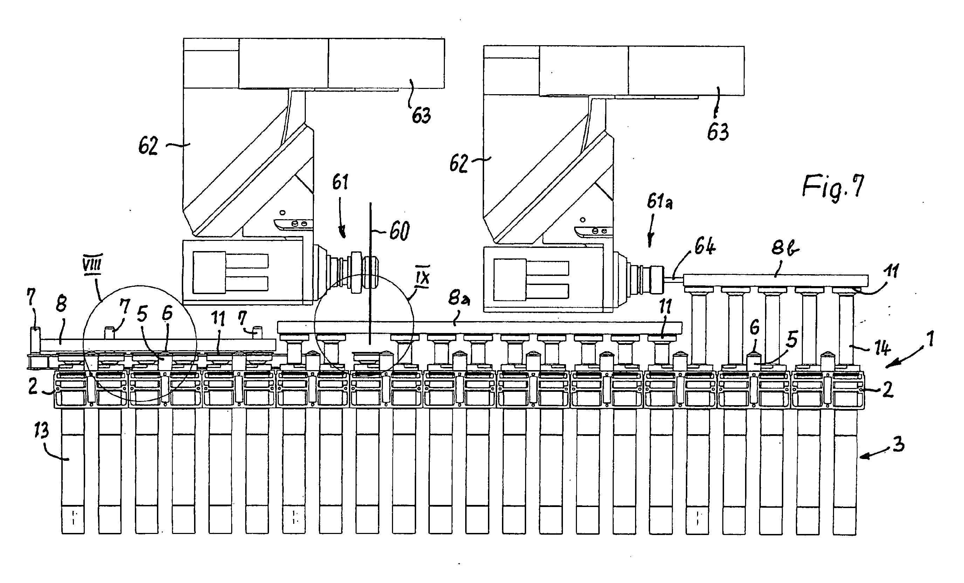

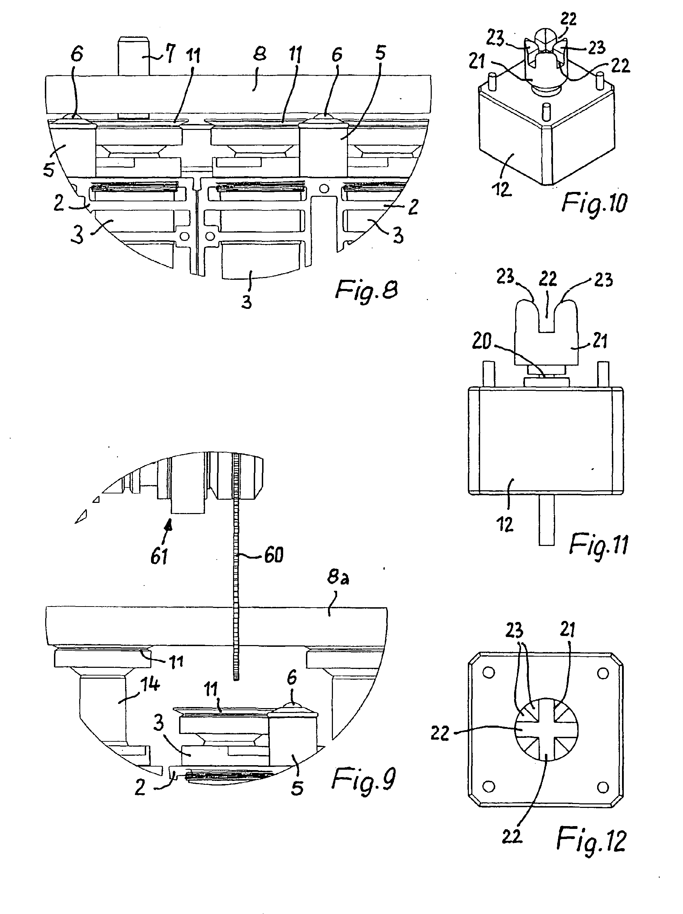

Der in seiner wesentlichen Gesamtheit den Figuren 1 und 7 entnehmbare Aufspanntisch 1 besteht aus einer Mehrzahl von querverlaufenden (y-Richtung) Traversen 2, deren jede eine Vielzahl von Paaren nebeneinander hin durch gesteckter Spannelemente 3 hält (Figuren 2 und 7). An ihrem unteren Ende sind die Spannelemente 3 an weiteren Traversen 4 gelagert, die parallel zu den Traversen 2 verlaufen, und an denen die Spannelemente 3 in einer Weise gehalten sind, auf die noch einzugehen sein wird (dies ist in der schematischen Darstellung der Figur 7 weggelassen worden). Die Traversen 2, 4 sind an einem - in den Zeichnungen nicht dargestellten - Bett oder Rahmen befestigt.
Jeweils zwischen vier im Quadrat benachbarten Spannelementen 3 sind Stützen 5 vorgesehen (Figuren 1 und 7), die jeweils oberseitig eine allseits drehbare Auflagerkugel 6 tragen. Auf die Kugeln 6 wird in der Ruhe- oder Ausgangsstellung der Spannelemente 3 ein zu bearbeitendes Werkstück gelegt und in der Oberflächenebene des Aufspanntisches 1 verschoben, ehe der Aufspannvorgang beginnt (Figur 8). Anschläge 7 dienen der (rechtwinkligen) Ausrichtung eines plattenförmigen Werkstücks 8 auf dem Aufspanntisch 1 (Figur 7, 8).
Jedes Spannelement 3 des in den Figuren 2 bis 5 dargestellten Ausführungsbeispiels besteht im Wesentlichen aus einer Teleskoprohreinheit 10, einem Saugteller 11 und einem Positionierungsantrieb 12 in Form eines Schrittmotors (Figur 2). Jede Teleskoprohreinheit 10 besteht aus einem äußeren, stationären Teleskoprohr 13 und einem inneren, vertikal beweglichen Teleskoprohr 14. Am Basisteil 15 des Spannelements 3 ist das äußere Teleskoprohr 13 befestigt und in seinem Inneren ist eine Welle 16 gelagert, die sich in einer Spindel 17 fortsetzt. Eine auf der Spindel 17 geführte Spindelmutter 18 ist am inneren Teleskoprohr 14 befestigt, so dass eine Drehung der Spindel 17 mit der Welle 16 zu einer linearen (Aufwärts-)Bewegung des inneren Teleskoprohres 14 führt; ein oben geschlossenes Schutzrohr 19 dient der Sauberhaltung des Spindeltriebs 17, 18.
Der Schrittmotor 12 ist in der Traverse 4 in der der Figur 2 entnehmbaren Weise befestigt. Auf der Abtriebswelle 20 des Schrittmotors 12 ist ein Kupplungspartner 21 einer mechanischen, formschlüssigen Steckkupplung befestigt, der zwei senkrecht zueinander verlaufende Quernuten 22 aufweist; siehe auch die vergrößerten Darstellungen in den Figuren 4, 5, welche die Kupplung in zueinander um 90° verdrehten Schnitten darstellen. Die Ränder der Quernuten 22 sind durch Abrundung mit Einweisungsschrägen 23 versehen. In eine der Quernuten 22 greift - im zusammengebauten Zustand (Figur 2) - eine Klinge 24 des anderen Kupplungspartners 25 ein, welcher an der Welle 16 formschlüssig befestigt ist. Um Zwängungen aufgrund einer Exzentrizität zwischen der Abtriebswelle 20 des Schrittmotors 12 (und damit dem Kupplungspartner 21) gegenüber der Welle 16 des Spindeltriebs 17, 18 auszuschalten, hat die Welle 16 einen umgekehrt T-förmigen Ansatz, dessen Quersteg 26 in eine entsprechend C-förmigen, senkrecht zur Längserstreckung der Klinge 24 verlaufenden Nut 27 des Kupplungspartners 25 geführt ist (Figur 4, 5) und so seitliche Ausgleichsbewegungen senkrecht zur Quererstreckung der Klinge 24 ausführen kann. Die elektrischen Anschlüsse der Schrittmotoren 12 sind in Figur 2 nicht dargestellt.
Der obere Abschnitt 13a des äußeren (stationären) Teleskoprohres 13 ist mit dem unteren Abschnitt 13b verschraubt und trägt eine Dichtung 30 gegenüber dem inneren (beweglichen) Teleskoprohr 14. Eine weitere Dichtung 31 zwischen den beiden Teleskoprohren 13, 14 ist am oberen Ende des Teleskoprohrabschnittes 13a vorgesehen. Die Halterung der Dichtung 31 ist als Ring 32 ausgebildet, der im Teleskoprohrabschnitt 13a eine Ringmanschette 33 hält, welche dünnwandig mit beabstandeten Befestigungs- und Dichtungsringen 34 aus Kunststoff besteht. Die Ringe 34 bilden zwischen sich, der Ringmanschette 33 und dem Teleskoprohrabschnitt 13a einen Ringraum 35 aus, welcher über eine Zugangsbohrung 36 im Teleskoprohrabschnitt 13a mit Druckluft versorgt werden kann, um die Ringmanschette gegen das innere Teleskoprohr 14 zu pressen und auf diese Weise zu arretieren, wenn es ausgefahren ist.
Die Traversen 2 bilden mit Hilfe paralleler Zwischenwandungen 40 und 41 Luftführungskanäle 42, 43. Zu diesem Zweck sind für die Aufnahme der Spannelemente 3 im Durchmesser gestufte Bohrungen in den Außenwänden der Traversen 2 und den Wandungen 40, 41 vorgesehen, die jeweils mit O-Ring-Dichtungen 44 gegen den im Außendurchmesser entsprechend gestuften Teleskoprohrabschnitt 13a des stationären Teleskoprohres 13 abdichten. Die Befestigung des Teleskoprohrabschnitts 13a und damit des gesamten Spannelements 3 erfolgt durch Einschrauben eines im Durchmesser vergrößerten Abschnitts des Teleskoprohrabschnitts 13a in die obere Außenwandung der Traverse 2 bei 45 (Figur 3). Durch den Luftführungskanal 42 wird Druckluft über die Zugangsbohrung 36 in den Ringraum 35 geleitet, wenn nach dem Ausfahren des inneren Teleskoprohres 14 dieser gegenüber dem äußeren Teleskoprohr 13 arretiert werden soll. An den Luftführungskanal 43 wird Unterdruck gelegt, der durch die Einlassbohrung 48 am Zwischenraum zwischen dem inneren Teleskoprohr 14 und dem äußeren Teleskoprohrabschnitt liegt. Solange sich das innere Teleskoprohr 14 in seiner in Figur 2 dargestellten Ruhestellung befindet, kann der - ständig anliegende - Unterdruck nicht in den Innenraum des inneren Teleskoprohres 14 gelangen und im Saugteller 11 durch die zentrische Bohrung 47 wirksam werden. Wird das innere Teleskoprohr 14 jedoch (nach oben) ausgefahren, gelangt die Einlassbohrung 48 im inneren Teleskoprohr 14 an der Dichtung 30 vorbei und steht dann mit dem Raum zwischen dem inneren Teleskoprohr 14 und dem Rohrabschnitt 13a des äußeren Teleskoprohres 13 in Verbindung, so dass der Unterdruck am Saugteller 11 anliegt.

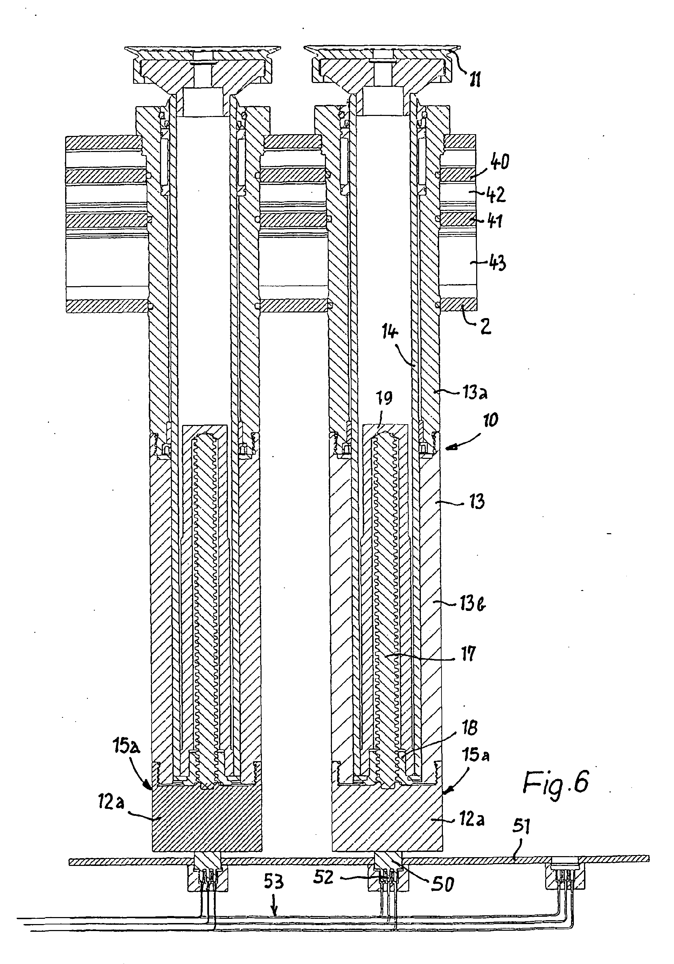

Figur 6 veranschaulicht ein anderes Ausführungsbeispiel des Spannelements 3. Bei diesem enthält das Basisteil 15a den Positionierungstrieb in Form eines Schrittmotors 12a als integralen Bestandteil. Er ist unmittelbar mit der Spindel 17 verbunden, die im Übrigen in gleicher Weise wirkt wie im Falle des ersten Ausführungsbeispieles. Ein koaxialer Zapfen 50 am Schrittmotor 12a stellt sowohl die mechanische Zentrierung des Spannelements in einer Bodenplatte 51 (die an die Stelle der Traverse 4 des ersten Ausführungsbeispieles tritt) her und zugleich den elektrischen Anschluss 52 mit der Zuleitung 53. Im Übrigen entspricht die Ausbildung der des Spannelements derjenigen des ersten Ausführungsbeispiels.
Im Folgenden soll anhand der Figuren 7 bis 9 der Betrieb des erfindungsgemäßen Aufspanntisches erläutert werden. Wenn ein plattenförmiges Werkstück auf den Aufspanntisch aufgelegt wird, befinden sich sämtliche Spannelemente mit ihren Saugtellern 11 im vollständig eingefahrenen (abgesenkten) Zustand, wie er am besten Figur 8 zu entnehmen ist. Das Werkstück 8 liegt auf den Kugeln 11 der Stützen 5 auf und kann auf diese Weise ausgerichtet, insbesondere gegen die Anschläge 7 geschoben werden. Dann werden diejenigen Spanneinheiten 3 aktiviert, welche nicht durch ihr Ausfahren die spätere Bearbeitung des Werkstücks behindern würden. Sie werden im Allgemeinen programmgesteuert ausgewählt; dies geschieht durch Ansteuern der zugehörigen Schrittmotore 12. Die inneren Teleskoprohre 14 der betreffenden Spannelemente 3 werden dadurch mit Hilfe des Spindeltriebs 17, 18 ausgefahren und heben das Werkstück 8 gleichmäßig von den Stützen 5 ab. Sobald dabei die Einlassbohrung 48 die Dichtung 30 passiert, wird Unterdruck an die Spannteller 11 gelegt, so dass diese das Werkstück festspannen. In diesem nur zum Teil ausgefahrenen Zustand der inneren Teleskoprohre 14 kann beispielsweise das aufgespannte Werkstück 8a mit Hilfe eines ein Kreissägeblatt 60 aufweisenden Bearbeitungsaggregats zersägt (formatiert) werden, wie dies im Mittelteil der Figur 7 dargestellt ist. Das Bearbeitungsaggregat 61 ist an einem - im Beispiel 5-achsigen - Werkzeugkopf 62 gehalten, der seinerseits mit Hilfe eines Auslegers 63 in Längsrichtung (x-Richtung) des Aufspanntisches 1 verfahrbar ist; Einzelheiten hiervon sind weggelassen.
Rechts neben der soeben erläuterten Anordnung ist in Figur 7 das seitliche Bohren eines Werkstücks 8b mit Hilfe desselben Werkzeugkopfes 62, aber einem anderen Bearbeitungsaggregat 61a mit einem Bohrer 64 gezeigt. Zu diesem Zweck sind die Teleskoprohre 14 der beteiligten Spannelemente 3 vollständig ausgefahren.
Die nahezu stufenlose Ausrichtung der Saugteller 11 aller Spannelemente 3 des Aufspanntisches gegenüber der Ebene, die vom in x- und y-Richtung verfahrbaren Werkzeugkopf einer mit dem Aufspanntisch ausgerüsteten Werkzeugmaschine bestimmt wird, erlaubt eine Art "Eichung" dahingehend, dass gegenüber dem Werkzeugkopf 62 oder einem in seine Werkzeugaufnahme eingespannten Messdorn (unter 180°-Drehung des Werkzeugkopfes gegenüber seinen in Figur 7 dargestellten Stellungen) eine Nullstellung jedes Spannelements festgestellt wird, etwa dadurch, dass die dafür erforderlichen Schrittzahlen ermittelt und in die Steuerung eingespeist werden.

## Patentansprüche

1. Spannelement für einen Aufspanntisch für Werkstücke in einer Werkzeugmaschine, das Spannelement umfassend eine Teleskoprohreinheit (10) mit einem oberseitigen Saugteller (11), wobei die konzentrischen Rohre (13, 14) der Teleskoprohreinheit (10) durch einen Positionierungsantrieb (12) relativ zueinander verschiebbar sind, und die Teleskoprohreinheit (10) durch Einstecken des äußeren Teleskoprohres (13) in tischüberspannenden Traversen (2) befestigbar ist,
**dadurch gekennzeichnet, dass** ein Saugluftpfad von einer Zugangsbohrung (46) im äußeren Teleskoprohr (13) durch den Ringraum zwischen den Rohren (13, 14) zu einer Einlassbohrung (48) im inneren Teleskoprohr (14) geführt ist, dessen Innenraum mit dem Saugteller (11) in Verbindung steht, wobei in der innenwandung des äußeren Teleskoprohres (13) eine Dichtung (30) gegenüber dem inneren Teleskoprohr (14) angeordnet ist, die nur im vollständig eingefahrenen Zustand des inneren Teleskoprohres und einem anschließenden kurzen Ausfahrbereich sich zwischen der Zugangsbohrung (46) und der Einlassbohrung (48) befindet, so dass der Saugluftpfad in mehreren axialen Arbeitsstellungen des Spannelements aufrechterhalten bleibt.

2. Spannelement nach Anspruch 1,
**dadurch gekennzeichnet, dass** der Positionierungsantrieb (12) koaxial zur Teleskoprohreinheit (10) angeordnet und mittels einer formschlüssigen Steckkupplung (21, 25) mit dem verschiebbaren Teleskoprohr (13) lösbar gekoppelt ist.

3. Spannelement nach Anspruch 1,
**dadurch gekennzeichnet, dass** der Positionierungsantrieb (12) koaxial an der Teleskoprohreinheit (10) angeordnet und mit dem verschiebbaren Teleskoprohr (13) bleibend gekoppelt sowie mittels einer lösbaren Steckverbindung (50, 52) an eine Stromversorgung (53) elektrisch angeschlossen ist.

4. Spannelement nach Anspruch 3,
**dadurch gekennzeichnet, dass** die Steckverbindung (50, 52) auch eine mechanische Zentrierung bildet.

5. Spannelement nach einem der Ansprüche 1-3
**dadurch gekennzeichnet, dass** der Positionierungsantrieb (12) ein Schrittmotor ist, der mit einem zentrischen Spindeltrieb (17. 18) in der Teleskopeinheit (10) zusammenwirkt.

6. Spannelement nach einem der vorhergehenden Ansprüche und Anspruch 2,
**dadurch gekennzeichnet, dass** die Steckkupplung (21, 25) aus mindestens einer zentrischen Quernut (22) im einen Kupplungspartner (21) und einer in diese eingreifenden Klinge (24) am anderen Kupplungspartner (25) besteht, wobei die Klinge an einer Muffe sitzt, die in einem Basisteil des anderen Kupplungspartners (25) senkrecht zur Klinge verschieblich geführt ist.

7. Spannelement nach Anspruch 6,
**dadurch gekennzeichnet, dass** im einen Kupplungspartner (21) zwei Quernuten (22) senkrecht zueinander angeordnet sind.

8. Spannelement nach Anspruch 6 oder 7,
**dadurch gekennzeichnet, dass** die Ränder der Quernut(en) (22) mit Einweisungsschrägen (23) versehen sind.

9. Spannelement nach einem der Ansprüche 1 bis 8,
**dadurch gekennzeichnet, dass** im stationären (äußeren) Teleskoprohr (13) der Teieskoprohreinheit (10) nahe ihrem kupplungsfernen Ende eine Ringmanschette (33) befestigt ist, wobei der Raum (35) zwischen dieser und der Innenwandung des stationären Teleskoprohres (13) mit Druckluft beaufschlagbar ist, um durch Anpressen der Manschette (33) an das bewegliche (innere) Teleskoprohr (14) dieses klemmend zu arretieren.

10. Spannelement nach Anspruch 9,
**dadurch gekennzeichnet, dass** die dünnwandige Manschette (33) einstückig mit beabstandeten Befestigungs- und Dichtungsringen (34) aus Kunststoff besteht.

11. Aufspanntisch (1) mit einer Vielzahl nebeneinander angeordneter Spannelemente (3),
**dadurch gekennzeichnet, dass** jedes Spannelement nach einem der Ansprüche 1-10 ausgebildet ist.

12. Aufspanntisch nach Anspruch 11,
**dadurch gekennzeichnet, dass** die Teleskopeinheiten (10) jeweils mit ihrem Saugteller (11) und ihrem Kupplungs- bzw. elektrischen Verbindungspartner (25; 50) in tischüberspannenden Traversen (2) durch Einstecken des äußeren Teleskoprohres (13) befestigbar sind und in der Befestigungssteilung die Steckkupplung (21, 25) bzw. Verbindung (50, 52) geschlossen ist.

13. Aufspanntisch nach Anspruch 12,
**dadurch gekennzeichnet, dass** die Positionierungsantriebe (12) jeweils nebst Kupplungspartner (25) bzw. elektrischem Verbindungspartner (50) ebenfalls in Traversen (4; 51) angeordnet sind, die parallel zu den Traversen (2) der Teleskopeinheiten (10) verlaufen.

14. Aufspanntisch nach Anspruch 12,
**dadurch gekennzeichnet, dass** die Traversen (2) der Teleskopeinheiten (10) aus Hohlprofilen mit mehreren parallelen Wandungen (40, 41) bestehen, die Luftführungskanäle (42, 43) bilden und von Stufenbohrungen zur Aufnahme der Teleskopeinheiten (10) durchsetzt sind, wobei an diesen angeordnete Ringdichtungen (44) axial versetzte Abschnitte des äußeren Teleskoprohres (13), in denen radiale Zugangsbohrungen (36; 46) vorgesehen sind, gegen die Wandungen (40, 41) abdichten.

15. Aufspanntisch nach einem der Ansprüche 12-14,
**gekennzeichnet durch** eine von den Oberflächen von Stützen (5) definierte Werkstück-Zuführebene, die im vollständig eingefahrenen Zustand des inneren Teleskoprohres (14) oberhalb der Saugteller-Oberseiten, aber innerhalb des kurzen Ausfahrbereichs des inneren Teleskoprohres (14) liegt.

16. Aufspanntisch nach Anspruch 15,
**dadurch gekennzeichnet, dass** die Stützen-Oberflächen von allseitig drehbaren Kugeln (6) gebildet sind.

17. Verfahren zum Betreiben eines Aufspanntisches nach Anspruch 15,
**dadurch gekennzeichnet, dass** das aufzuspannende Werkstück (8) unter Seitenausrichtung auf die Stützen (5) gelegt wird, hierauf die programmiert ausgewählten Spannelemente (3) gegen das Werkstück (8) ausgefahren werden und dieses bis über den kurzen Ausfahrbereich hinaus anheben, so dass durch den Saugluftpfad (46, 48) Unterdruck an die die unterbrochene Werkstück-Auflagefläche bildenden Saugteller (3) gelangt und das Werkstück (8) festgespannt wird, und dass schließlich diese aktivierten Spannelemente (3) weiter in eine Arbeitsstellung ausgefahren werden.

## Claims

1. A clamping element for a clamping table for workpieces in a machine tool, the clamping element comprising a telescopic tube unit (10) with a suction cup (11) on the top, wherein the concentric tubes (13, 14) of the telescopic tube unit (10) are displaceable relative to each other by a positioning drive (12), and the telescopic tube unit (10) is capable of being fastened in cross members (2) extending over the table by the insertion of the outer telescopic tube (13), **characterized in that** a suction-air path extends from an access bore (46) in the outer telescopic tube (13) through the annular space between the tubes (13, 14) to an inlet bore (48) in the inner telescopic tube (14), the interior space of which is connected to the suction cup (11), wherein a seal (30) is arranged opposite the inner telescopic tube (14) in the inner wall of the outer telescopic tube (13) and is present between the access bore (46) and the inlet bore (48) only in the completely retracted state of the inner telescopic tube and an adjoining short extension range, so that the suction-air path is maintained in a plurality of axial operative settings of the clamping element.

2. A clamping element according to Claim 1, **characterized in that** the positioning drive (12) is arranged coaxially to the telescopic tube unit (10) and is coupled to the displaceable telescopic tube (13) in a releasable manner by means of a positively locking plug-in coupling (21, 25).

3. A clamping element according to Claim 1, **characterized in that** the positioning drive (12) is arranged coaxially on the telescopic tube unit (10) and is coupled to the displaceable telescopic tube (13) in a permanent manner and is electrically connected to a current supply (53) by means of a releasable plug-in connexion (50, 52).

4. A clamping element according to Claim 3, **characterized in that** the plug-in connexion (50, 52) also forms a mechanical centring.

5. A clamping element according to any one of Claims 1 to 3, **characterized in that** the positioning drive (12) is a stepping motor which co-operates with a central spindle drive (17, 18) in the telescopic unit (10).

6. A clamping element according to any one of the preceding Claims and Claim 2, **characterized in that** the plug-in coupling (21, 25) consists of at least one central transverse groove (22) in one coupling participant (21) and a blade (24) engaging in the latter on the other coupling participant (25), wherein the blade is mounted on a sleeve which is guided in a base part of the other coupling participant (25) in a manner displaceable at a right angle to the blade.

7. A clamping element according to Claim 6, **characterized in that** two transverse grooves (22) are arranged at a right angle to each other in one coupling participant (21).

8. A clamping element according to Claim 6 or 7, **characterized in that** the edges of the transverse groove or grooves (22) are provided with guidance slopes (23).

9. A clamping element according to any one of Claims 1 to 8, **characterized in that** in the stationary (outer) telescopic tube (13) of the telescopic tube unit (10) an annular collar (33) is fastened in the vicinity of the end thereof remote from the coupling, wherein the space (35) between the said annular collar (33) and the inner wall of the stationary telescopic tube (13) is capable of being acted upon with compressed air in order to lock the movable (inner) telescopic tube (14) in a clamped manner by pressing the collar (33) against the latter.

10. A clamping element according to Claim 9, **characterized in that** the thin-walled collar (33) consists of plastics material in one piece with fastening and sealing rings (34) arranged at a distance.

11. A clamping table (1) with a plurality of clamping elements (3) arranged adjacent to one another, **characterized in that** each clamping element is designed in accordance with any one of Claims 1 to 10.

12. A clamping table according to Claim 11, **characterized in that** as a result of the outer telescopic tube (13) being plugged-in the telescopic units (10) are capable of being fastened by their suction cup (11) and their coupling and electrical connecting participants (25; 50) in each case in the cross members (2) extending over the table and the plug-in coupling (21, 25) or connexion (50, 52) is closed in the fastening position.

13. A clamping table according to Claim 12, **characterized in that** the positioning drives (12) together with the coupling participant (25) or the electrical coupling participant (50) respectively are likewise arranged in each case in cross members (4; 51) which extend parallel to the cross members (2) of the telescopic units (10).

14. A clamping table according to Claim 12, **characterized in that** the cross members (2) of the telescopic units (10) consist of hollow profiles with a plurality of parallel walls (40, 41) which form air-guiding ducts (42, 43) and through which stepped bores pass in order to receive the telescopic units (10), wherein annular seals (44) arranged on the latter seal off axially offset portions - in which radial access bores (36; 45) are provided - of the outer telescopic tube (13) from the walls (40, 41).

15. A clamping table according to any one of Claims 12 to 14, **characterized by** a workpiece-supply plane which is defined by the surfaces of supports (5) and which in the completely retracted state of the inner telescopic tube (14) is situated above the top sides of the suction cups but inside the short extension range of the inner telescopic tube (14).

16. A clamping table according to Claim 15, **characterized in that** the support surfaces are formed by balls (6) rotatable on all sides.

17. A method of operating a clamping table according to Claim 15, **characterized in that** the workpiece (8) to be clamped is placed on the supports (5) with lateral alignment, after that the clamping elements (3) selected in a programmed manner are moved out towards the workpiece (8) and the latter is lifted beyond the short extension range, so that under-pressure reaches the suction cups (3) forming the interrupted workpiece-abutment face through the suction-air path (46, 48) and the workpiece (8) is clamped tight, and finally the said activated clamping elements (3) are extended further into an operative position.

## Revendications

1. Elément d'ablocage pour une table d'ablocage destinée à des pièces d'oeuvre dans une machine-outil, l'élément d'ablocage comprenant une unité de tubes télescopiques (10) avec une ventouse à coupelle (11) du côté supérieur, les tubes concentriques (13, 14) de l'unité de tubes télescopiques (10) pouvant coulisser relativement l'un par rapport à l'autre au moyen d'un entraînement de positionnement (12), et l'unité de tubes télescopiques (10) pouvant être fixée par emmanchement du tube télescopique extérieur (13) dans des traverses (2) s'étendant par-dessus l'étendue de la table,
**caractérisé en ce qu'**un parcours de cheminement d'air d'aspiration mène par l'espace annulaire entre les tubes (13, 14) d'un alésage d'accès (46) dans le tube télescopique extérieur (13) à un alésage d'entrée (48) dans le tube télescopique intérieur (14) dont l'espace intérieur est en communication avec la ventouse à coupelle (11), et dans la paroi intérieure du tube télescopique extérieur (13) est agencé, par rapport au tube télescopique intérieur (14), un joint d'étanchéité (30) qui ne se trouve situé entre l'alésage d'accès (46) et l'alésage d'entrée (48) que dans l'état totalement rentré ou rétracté du tube télescopique intérieur et sur une courte plage de sortie ou d'extraction attenante, de sorte que le parcours d'air d'aspiration reste conservé dans plusieurs positions de travail axiales de l'élément d'ablocage.

2. Elément d'ablocage, selon la revendication 1, **caractérisé en ce que** l'entraînement de positionnement (12) est agencé coaxialement à l'unité de tubes télescopiques (10) et est couplé de manière amovible au tube télescopique (13) coulissant, au moyen d'un accouplement à emmanchement (21, 25) par complémentarité de formes.

3. Elément d'ablocage, selon la revendication 1, **caractérisé en ce que** l'entraînement de positionnement (12) est agencé coaxialement sur l'unité de tubes télescopiques (10) et est couplé de manière permanente au tube télescopique coulissant (13) ainsi que raccordé à une alimentation électrique (53) au moyen d'un connecteur enfichable (50, 52) démontable.

4. Elément d'ablocage, selon la revendication 3, **caractérisé en ce que** le connecteur enfichable (50, 52) réalise également un centrage mécanique.

5. Elément d'ablocage, selon l'une des revendications 1 à 3, **caractérisé en ce que** l'entraînement de positionnement (12) est un moteur pas à pas, qui coopère avec une transmission d'entraînement à vis (17, 18) centrale dans l'unité de tubes télescopiques (10).

6. Elément d'ablocage, selon l'une des revendications précédentes et la revendication 2, **caractérisé en ce que** l'accouplement à emmanchement (21, 25) est réalisé par au moins une rainure transversale (22) centrée dans l'un (21) des partenaires d'accouplement et, s'y engageant, une lame (24) sur l'autre partenaire d'accouplement (25), la lame étant placée sur un manchon qui est guidé de manière à pouvoir coulisser perpendiculairement à la lame dans une pièce de base de l'autre partenaire d'accouplement (25).

7. Elément d'ablocage, selon la revendication 6, **caractérisé en ce que** dans ledit un partenaire d'accouplement (21) sont agencées perpendiculairement l'une à l'autre, deux rainures transversales (22).

8. Elément d'ablocage, selon la revendication 6 ou 7, **caractérisé en ce que** les bords de la ou des rainure(s) transversale(s) (22) sont munis de rampes inclinées d'entrée (23).

9. Elément d'ablocage, selon l'une des revendications 1 à 8, **caractérisé en ce que** dans le tube télescopique stationnaire (extérieur) (13) de l'unité de tubes télescopiques (10), à proximité de son extrémité éloignée de l'accouplement, est fixée une manchette annulaire (33), l'espace (35) entre cette dernière et la paroi intérieure du tube télescopique stationnaire (13) pouvant être alimenté en air comprimé pour bloquer par serrage le tube télescopique mobile (intérieur) (14), par pressage de la manchette (33) contre ce dernier.

10. Elément d'ablocage, selon la revendication 9, **caractérisé en ce que** la manchette (33) à paroi mince est réalisée d'un seul tenant avec des bagues de fixation et d'étanchéité (34) en matière plastique.

11. Table d'ablocage (1) comprenant un grand nombre d'éléments d'ablocage (3) agencés les uns à côté des autres,
**caractérisée en ce que** chaque élément d'ablocage est réalisé selon l'une des revendications 1-10.

12. Table d'ablocage selon la revendication 11, **caractérisée en ce que** les unités télescopiques (10), chacune avec sa ventouse à coupelle (11) et son partenaire d'accouplement respectivement de connexion (25 ; 50), peuvent être fixées, par emmanchement du tube télescopique extérieur (13), dans des traverses (2) s'étendant par-dessus l'étendue de la table, et, dans la position fixée, l'accouplement à emmanchement (21, 25) ou respectivement le connecteur (50, 52) est fermé.

13. Table d'ablocage selon la revendication 12, **caractérisée en ce que** les entraînements de positionnement (12) sont également agencés, chacun avec le partenaire d'accouplement (25) respectivement avec le partenaire de connexion électrique (50), dans des traverses (4 ; 51) qui s'étendent parallèlement aux traverses (2) des unités télescopiques (10).

14. Table d'ablocage selon la revendication 12, **caractérisée en ce que** les traverses (2) des unités télescopiques (10) sont constituées par des profilés creux à plusieurs parois parallèles (40, 41) qui forment des canaux de cheminement d'air (42, 43) et sont traversées par des alésages étagés destinés à recevoir les unités télescopiques (10), des joints d'étanchéité annulaires (44) agencés dans celles-ci assurant l'étanchéité contre les parois (40, 41), de tronçons axialement décalés du tube télescopique extérieur (13), dans lesquels sont prévus des alésages d'accès (36 ; 46) d'orientation radiale.

15. Table d'ablocage selon l'une des revendications 12-14, **caractérisée par** un plan d'amenée de pièces d'oeuvre défini par la surface supérieure de supports (5) et se situant, pour l'état totalement rétracté ou rentré du tube télescopique intérieur (14), au-dessus des faces supérieures des ventouses à coupelles, mais à l'intérieur de la courte plage de sortie ou d'extraction du tube télescopique intérieur (14).

16. Table d'ablocage selon la revendication 15, **caractérisée en ce que** les surfaces supérieures des supports sont formées par des billes (8) rotatives dans tous les sens.

17. Procédé pour faire fonctionner une table d'ablocage selon la revendication 15,
**caractérisé en ce qu'**on dépose la pièce d'oeuvre (8) à abloquer sur les supports (5) en l'orientant latéralement, puis on procède à l'allongement par extraction des éléments d'ablocage (3) sélectionnés de manière programmée, contre la pièce d'oeuvre (8) en soulevant celle-ci jusqu'au-dessus de la courte plage d'extraction, de sorte qu'une dépression parvient, par l'intermédiaire du parcours d'air d'aspiration (46, 48), aux ventouses à coupelle (32) formant la surface d'appui interrompue de la pièce d'oeuvre, en produisant ainsi l'ablocage de la pièce d'oeuvre (8), et **en ce que** finalement ces éléments d'ablocage (3) activés sont allongés davantage par extraction jusque dans une position de travail.
